Europäisches Patentamt

European Patent Office

Office européen des brevets

(19)

(11) Numéro de publication : **0 121 477 B1**

(12)

# FASCICULE DE BREVET EUROPÉEN

(45) Date de publication du fascicule du brevet :
07.09.88

(51) Int. Cl.⁴ : **A 22 C 17/02**, A 22 B   5/20

(21) Numéro de dépôt : **84400640.3**

(22) Date de dépôt : **29.03.84**

(54) **Procédé de traitement de carcasse ou demi-carcasse de viande et dispositif de mise en oeuvre.**

(30) Priorité : 30.03.83 FR 8305243

(43) Date de publication de la demande :
10.10.84 Bulletin 84/41

(45) Mention de la délivrance du brevet :
07.09.88 Bulletin 88/36

(84) Etats contractants désignés :
**AT BE CH DE FR GB IT LI LU NL SE**

(56) Documents cités :
**AU-B-    52 601
DE-A- 3 011 026
FR-A- 1 517 853
FR-A- 2 147 359
FR-A- 2 261 708
FR-A- 2 349 536
GB-A-    391 384
GB-A- 2 079 135
US-A- 2 236 103**

(73) Titulaire : **BOCA-OUEST
1 Place des Prairies
F-49300 Cholet (FR)**

(72) Inventeur : **Chiron, Gabriel
3, Square Saint-Philbert
F-49300 Cholet (FR)**
Inventeur : **Soulard, Marcel
L'Oseraie, route de Trementines
F-49200 Cholet (FR)**
Inventeur : **Fradin, Maurice
Rés. Jean Bart No 25 Esplanade de la Mer
F-85160 Saint-Jean de Monts (FR)**

(74) Mandataire : **Dossmann, Gérard et al
Bureau D.A. Casalonga Office Josse & Petit Baaderstrasse 12-14
D-8000 Munich 5 (DE)**

## Description

La présente invention a pour objet un procédé et une installation permettant de procéder à différentes opérations de prélèvement manuel de la viande à partir d'une carcasse ou d'une demi-carcasse en particulier de bovin.

Après abattage, les carcasses et demi-carcasses de bovins sont habituellement mises en chambre froide. Au moment de la distribution, on pratique ensuite une opération de désossage manuelle dans laquelle on découpe successivement des portions de la demi-carcasse comprenant à la fois les os et les muscles qui s'y trouvent attachés. Après cette première opération de désossage, on découpe le muscle en vue de sa distribution, précédée éventuellement de différentes opérations complémentaires de stockage et de conditionnement.

On a déjà imaginé d'améliorer ces procédés artisanaux en effectuant une série d'opérations de désossage sur une demi-carcasse immédiatement après abattage, la viande étant encore chaude et souple. C'est ainsi que dans le brevet français 2 329 208 se trouve un procédé de désossage automatique à partir d'une demi-carcasse suspendue qui se trouve ensuite reprise et déplacée à différents postes d'une installation de désossage automatique. Dans ce brevet, on maintient pour certaines opérations la demi-carcasse par une opération « d'agrafage » dans laquelle la demicarcasse est posée à plat et redressée sur une table de travail. La demi-carcasse est alors entraînée par une chaîne dont les maillons sont capables de saisir la colonne vertébrale ainsi redressée, chaque maillon venant enserrer une vertèbre tronçonnée. Des lames de couteau à commande automatique peuvent alors procéder au tranchage de la viande en suivant les os.

Dans la pratique, ce procédé présente cependant un certain nombre d'inconvénients. Le redressement de la colonne vertébrale des demi-carcasses s'avère en effet extrêmement difficile à mettre en œuvre dans la plupart des cas en raison d'une souplesse insuffisante de la colonne vertébrale. Le maintien de la colonne vertébrale par serrage entre le trou de moelle et la zone extérieure n'assure pas un serrage suffisant ce qui entraîne des risques de ripage. Par ailleurs, le caractère entièrement automatique des dispositifs de tranchage ne permet pas toujours dans la pratique d'épouser convenablement la forme de l'os de sorte que l'on risque de laisser une partie des muscles sur la carcasse.

On connaît également par la demande de brevet australien AU-B-526 861 une installation d'abattage, de vidage et de découpe de carcasses de bovins. Dans cette installation, la carcasse est toujours présentée horizontalement. En outre dans le brevet français FR-A-1 517 853 se trouvent décrites différentes étapes de désossage d'un quartier de viande maintenu par la colonne vertébrale.

La présente invention a pour objet un procédé de traitement de carcasse ou de demi-carcasse de bovin ou autre quadrupède qui supprime les inconvénients de l'art antérieur et qui permette en particulier de prélever manuellement les muscles d'une carcasse ou d'une demi-carcasse sans enlèvement des os et pratiquement sans contact avec les os dans des conditions de rapidité, de confort et d'hygiène qui n'avaient pas encore pu être atteintes.

Le procédé selon l'invention s'oriente donc dans une direction différente de celle qui est préconisée dans le brevet français précité 2 329 208 en prévoyant le prélèvement des muscles de la carcasse sans pratiquer d'opération intermédiaire de désossage. Le procédé selon l'invention permet d'améliorer notablement le processus de traitement de demi-carcasse utilisé auparavant tout en permettant, dans une installation semi-automatique, un enrichissement des taches manuelles du personnel.

L'invention a également pour objet un dispositif de support qui peut être utilisé dans une installation permettant la mise en œuvre du procédé de l'invention.

Le procédé de traitement de carcasse ou de demi-carcasse de bovin ou autre quadrupède selon l'invention permet le traitement de ces carcasses se présentant initialement en position suspendue verticalement. Selon le procédé de l'invention, on fait passer la carcasse ou la demi-carcasse de sa position verticale suspendue à une position sensiblement horizontale, dans laquelle on la maintient supportée par la colonne vertébrale et on prélève les muscles successivement à partir de la carcasse ou de la demi-carcasse sans procéder à un désossage substantiel intermédiaire de façon qu'à la fin du prélèvement des muscles, seul le squelette de la carcasse ou de la demi-carcasse reste maintenu supporté dans sa position horizontale. Dans ces conditions, les muscles sont successivement prélevés à partir des os qui restent attachés à la colonne vertébrale elle-même maintenue supportée ou suspendue en position horizontale.

Le procédé de l'invention permet donc le traitement de demi-carcasses ou de carcasses entières et peut être appliqué immédiatement après abattage ou selon les cas après un temps convenable de réfrigération. La disposition horizontale de la carcasse ou de la demi-carcasse permet à deux personnes de travailler simultanément pour effectuer un prélèvement manuel des muscles. La gravité assiste le travail de prélèvement, les muscles ne risquant pas en outre de tomber les uns sur les autres comme cela serait le cas si le travail de prélèvement s'effectuait sur une carcasse ou une demi-carcasse suspendue verticalement. Dans ces conditions, il est possible d'effectuer le travail de prélèvement en commençant à n'importe quel endroit de la carcasse sans risquer un tel contact entre les muscles nuisibles à l'hygiène. Il est également possible d'opérer le prélèvement simultanément sur les deux côtés d'une carcasse entière.

La carcasse ou la demi-carcasse ainsi maintenue en position sensiblement horizontale peut être amenée à subir une rotation autour d'un axe sensiblement horizontal afin que chaque portion puisse être présentée dans la meilleure position possible en vue du prélèvement des muscles. Il est également possible dans un mode de réalisation avantageux de prévoir la possibilité d'un déplacement vertical d'ensemble de la carcasse ou de la demi-carcasse par rapport à l'opérateur ou l'inverse afin là également que les muscles à prélever se présentent dans la meilleure position.

Pour améliorer le maintien de la carcasse ou de la demi-carcasse en position horizontale pendant l'opération du prélèvement, il est avantageux d'exercer entre au moins certaines portions de la carcasse ou de la demi-carcasse, un effort d'extension de façon à maintenir et rigidifier la carcasse ou la demi-carcasse.

Dans un premier mode de réalisation, on exerce à cet effet un effort d'extension entre l'extrémité correspondant à la crosse arrière d'une demi-carcasse et plusieurs endroits de la colonne vertébrale sectionnée longitudinalement de façon à maintenir et rigidifier la demi-carcasse.

Dans un deuxième mode de réalisation, on fait traverser l'os du bassin d'une carcasse entière par un organe de support qui peut être placé en position sensiblement horizontale et sur lequel vient s'appuyer la face interne de la colonne vertébrale sous l'effet de la gravité pendant toute l'opération de prélèvement des muscles. Dans le cas d'une demi-carcasse, la face interne de la colonne vertébrale de la demi-carcasse vient en appui sur l'organe de support qui peut être placé en position sensiblement horizontale et qui comporte de préférence des moyens de retenue, la demi-carcasse étant alors maintenue dans cette position pendant toute l'opération de prélèvement des muscles.

Dans ce cas, on exerce de préférence un effort d'extension sur la ou les crosses arrières et sur au moins une zone proche du sternum de la carcasse ou de la demi-carcasse, celle-ci restant en appui par la face interne de la colonne vertébrale de l'organe de support.

Il est également possible d'exercer un effort de traction sur d'autres portions de la carcasse ou de la demi-carcasse, par exemple sur le collier afin de le redresser en direction horizontale s'il n'a pas été initialement découpé ou sur l'os de la queue, en particulier dans le cas d'une demi-carcasse.

Les efforts d'extension ainsi effectués qui ont pour but d'améliorer le maintien de la carcasse ou de la demi-carcasse sur son organe de support peuvent être exercés sur la carcasse en position verticale avant de la placer en position horizontale.

Il est également possible de procéder de manière inverse en effectuant tout d'abord le passage de la carcasse de sa position initiale suspendue à sa position horizontale de prélèvement des muscles.

Selon un mode de réalisation avantageux, la carcasse entière suspendue verticalement par les deux crosses arrières sur des rails de manutention, est amenée au-dessus de l'organe de support horizontal, la portion interne voisine du collier de la carcasse venant prendre appui sur ledit organe. On abaisse ensuite progressivement les deux crosses arrières jusqu'à ce que la carcasse soit sensiblement horizontale, la face interne de la colonne vertébrale venant s'appuyer sur ledit organe de support. Enfin, on fait coulisser une portion d'extrémité mobile de l'organe de support en la faisant pénétrer par le passage de l'os du bassin ou passage du quasi. La carcasse est alors maintenue sous l'action de son propre poids par l'organe de support et l'on peut procéder directement au prélèvement des muscles. On peut également exercer les efforts de traction mentionnés précédemment afin d'améliorer le maintien de la carcasse dans cette position.

Dans un autre mode de réalisation, la carcasse suspendue verticalement par les deux crosses arrières sur des rails de manutention est amenée au-dessus de l'organe de support qui est cette fois en position verticale. La carcasse est ensuite déplacée verticalement relativement à l'organe de support de façon que ce dernier pénètre par le passage de l'os du bassin ou passage du quasi. On abaisse ensuite progressivement les crosses arrières et simultanément l'organe de support de façon à mettre ce dernier et la carcasse en position horizontale en vue des opérations de prélèvement comme indiqué précédemment.

On notera que le prélèvement des muscles sur la carcasse entière ou sur la demi-carcasse maintenue en position horizontale peut être fait à un poste de travail fixe par prélèvements manuels successifs de l'ensemble des muscles. Il est également possible dans une variante de maintenir la carcasse ou la demi-carcasse dans un dispositif de support en vue de son déplacement devant plusieurs postes, un certain nombre de muscles étant prélevés à chacun de ces postes.

La présente invention a également pour objet une installation de traitement de carcasses ou demi-carcasses de bovins ou autres quadrupèdes comprenant au moins un dispositif de support muni d'une barre de support de la carcasse ou de la demi-carcasse en position horizontale. Selon l'invention, la barre de support comporte une pluralité de dents d'accrochage venant coopérer avec les faces latérales de la colonne vertébrale. De plus, le dispositif de support comporte au moins un vérin de poussée arrière articulé à rotule sur la barre de support et dont la tige présente des moyens d'accrochage sur au moins la crosse arrière et au moins un vérin de poussée avant articulé à rotule sur la barre de support et dont la tige présente des moyens d'accrochage sur au moins une zone voisine du sternum. L'installation comprend en outre des moyens de transfert pour faire passer la carcasse ou la demi-carcasse d'une position initiale verticale suspendue à la position horizontale sur la barre de support, lesdits moyens de transfert comprenant des moyens pour déplacer la barre de support jusqu'au contact avec au moins des portions des faces latérales de la colonne vertébrale de la carcasse suspendue et des moyens pour abaisser progressivement le point de suspension de la carcasse jusqu'à ce qu'elle se trouve en position horizontale.

Dans une installation selon l'invention, adaptée au cas d'une carcasse, les moyens de transfert comprennent des moyens pour faire pivoter la barre de support depuis une position verticale jusqu'à une position horizontale et des moyens pour abaisser la carcasse initialement suspendue au-dessus de la barre de support verticale jusqu'à ce que son extrémité pénètre par le passage du quasi.

Dans une installation selon l'invention adaptée au cas d'une carcasse les moyens de transfert comprennent des moyens pour déplacer en translation la barre de support, de façon à pouvoir faire coulisser ladite barre dans le passage du quasi après que la carcasse ait été progressivement abaissée jusqu'à la position horizontale.

Dans un autre mode de réalisation, l'installation selon l'invention comprend un cadre mobile présentant une traverse longitudinale munie à ses extrémités de deux montants latéraux. Un moyen de serrage est monté sur un axe de rotation solidaire de l'un des montants latéraux et est adapté pour venir enserrer la partie extrême d'une demi-carcasse correspondant à la crosse arrière. Une barre de rigidification de profil courbe adapté à la forme générale de la colonne vertébrale de la demi-carcasse présente plusieurs pinces qui sont capables de venir enserrer par l'extérieur les vertèbres sectionnées longitudinalement de la demi-carcasse en plusieurs points de la colonne vertébrale. Une extrémité de la barre de rigidification est fixée de manière excentrée sur un plateau rotatif monté sur le deuxième montant latéral du cadre mobile. Des moyens sont également prévus pour pouvoir faire varier l'écartement entre le moyen de serrage et au moins certaines des pinces montées sur la barre de rigidification de façon à provoquer un effort de traction sur la colonne vertébrale et de raidissement de la demi-carcasse. Des moyens sont en outre prévus pour faire tourner le cadre mobile d'une position verticale à une position horizontale.

La barre de rigidification dont le profil suit globalement la forme de la colonne vertébrale permet donc de maintenir latéralement la demi-carcasse tout en assurant l'extension qui améliore le maintien de la demi-carcasse au cours du prélèvement des muscles. L'existence de cette barre permet en outre d'exercer une traction axiale importante sur la demi-carcasse sans risquer la rupture de la colonne vertébrale, en particulier à la fin de l'opération de prélèvement lorsque la majeure partie des muscles ont été prélevés sur la demi-carcasse.

Des moyens sont également prévus de préférence pour modifier à volonté la hauteur du cadre mobile et de la demi-carcasse qu'il supporte en fonction du travail de prélèvement à réaliser au poste considéré de l'installation.

Le cadre mobile comprend avantageusement des moyens comprenant par exemple un secteur denté permettant sa rotation sur environ 90°. Il peut être fixé sur un bâti pouvant se déplacer en translation devant les différents postes de l'installation, la fixation étant réalisée de façon à pouvoir modifier la hauteur du cadre. A cet effet, on peut par exemple assurer la fixation du cadre sur le bâti par au moins un bras oscillant actionné par un vérin de commande.

Pour s'adapter à des colonnes vertébrales de longueur différente, l'extrémité libre de la barre de rigidification est de préférence télescopique. De plus, ladite extrémité libre est avantageusement reliée par un arceau rigide au montant latéral opposé, du côté de la crosse arrière, de façon à diminuer le porte-à-faux de la portion de demi-carcasse soutenue par la barre de rigidification.

Dans un mode de réalisation de l'installation selon l'invention, le cadre mobile est monté sur un bâti suspendu à un rail aérien permettant le déplacement en translation du dispositif devant les différents postes d'une installation.

Dans un autre mode de réalisation, le cadre mobile peut être monté sur un bâti solidaire d'un chariot qui permet également le déplacement en translation du dispositif devant les différents postes d'une installation.

L'invention sera mieux comprise à l'étude de la description détaillée de quelques modes de réalisation pris à titre d'exemples non limitatifs et illustrés par les dessins annexés, sur lesquels :

la figure 1 illustre schématiquement le premier poste d'une installation semi-automatique de traitement de demi-carcasse selon l'invention permettant la saisie d'une demi-carcasse initialement suspendue par la crosse arrière ;

la figure 2 illustre le même poste après que le cadre mobile ait subi une rotation de 90° de façon à placer la demi-carcasse en position sensiblement horizontale permettant le prélèvement des muscles ;

la figure 3 montre en vue en coupe de détail de la pince de serrage agissant sur la crosse arrière ;

la figure 4 est une vue de détail en coupe de l'une des pinces venant enserrer les vertèbres sectionnées de la demi-carcasse ;

la figure 5 illustre la dernière phase du traitement, la totalité des muscles ayant été prélevée sur la demi-carcasse qui ne comprend plus que le squelette ;

la figure 6 illustre une variante pour un dispositif de support selon l'invention monté sur un chariot ;

la figure 7 est une vue schématique d'une carcasse entière suspendue en position horizontale ;

la figure 8 est une vue depuis l'arrière montrant les vérins agissant sur les crosses arrières dans la vue de la figure 7 ;

la figure 9 est une vue en coupe montrant les vérins agissant au voisinage du sternum ;

la figure 10 est une vue schématique d'une demi-carcasse suspendue en position horizontale ;

la figure 11 illustre une variante de passage en position horizontale ;

la figure 12 est une vue de droite d'une étape du passage de la figure 11 ; et

les figures 13 et 14 illustrent une autre variante du passage en position horizontale.

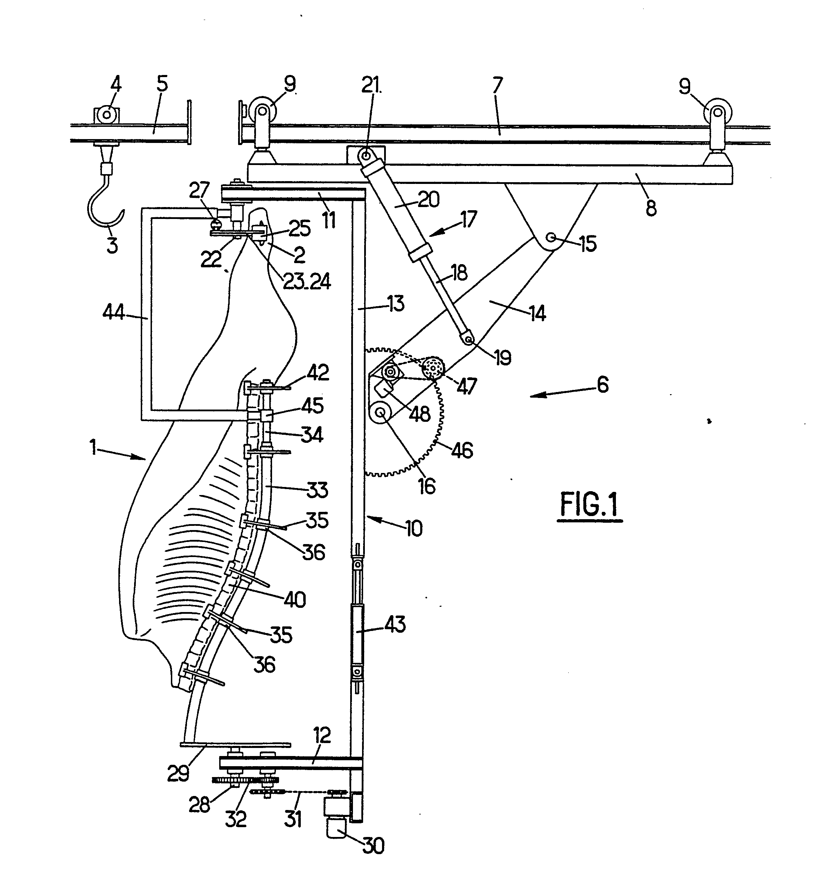

Tel qu'il est représenté sur les figures 1 à 5, le dispositif de support de l'invention est adapté pour soutenir et maintenir en extension une demi-carcasse de bovin 1 qui est amenée à l'installation en étant suspendue verticalement par sa crosse arrière 2 au moyen d'un crochet 3 qui peut se déplacer par l'intermédiaire d'un galet 4 sur un rail d'amenée 5. Immédiatement après abattage, la bête est dépouillée et la carcasse sciée en deux demi-carcasses qui sont suspendues ainsi qu'il vient d'être dit par leur crosse arrière 2 à différents crochets 3. Dans cette position verticale on procède tout d'abord à l'enlèvement de l'épaule dans une opération préliminaire qui n'est pas illustrée sur les figures.

L'installation selon l'invention peut comprendre une pluralité de postes de traitement qui peuvent être successivement parcourus par les demi-carcasses, le dispositif de support référencé 6 dans son ensemble se déplaçant sur un rail de guidage aérien 7. Selon la configuration de l'installation, le rail 7 peut être rectiligne ou effectuer une boucle le long de laquelle les différents postes de travail sont disposés. Bien entendu, l'installation peut comprendre également des postes fixes où la totalité du prélèvement est effectuée.

Le dispositif de support 6 comprend un bâti 8 analogue à un charriot qui, dans l'exemple de réalisation des figures 1 à 5 est suspendu et peut se déplacer au moyen des galets 9 sur le rail aérien 7. Un cadre mobile 10 présente deux montants latéraux 11 et 12 et une traverse longitudinale 13, l'ensemble affectant sensiblement la forme d'un demi-rectangle. Le cadre mobile 10 est suspendu au chariot de bâti 8 par l'intermédiaire d'un bras oscillant 14 qui joue le rôle d'un levier articulé entre un axe 15 monté sur le bâti 8 et un axe 16 solidaire du cadre mobile 10. Un vérin hydraulique 17 permet de faire varier l'inclinaison du bras oscillant 14 autour de l'axe 15. A cet effet, la tige 18 du vérin 17 est reliée à un axe 19 fixé sur le bras 14 sensiblement dans sa portion médiane. Le cylindre 20 du vérin 17 est relié quant à lui au pivot 21 monté sur le bâti 8.

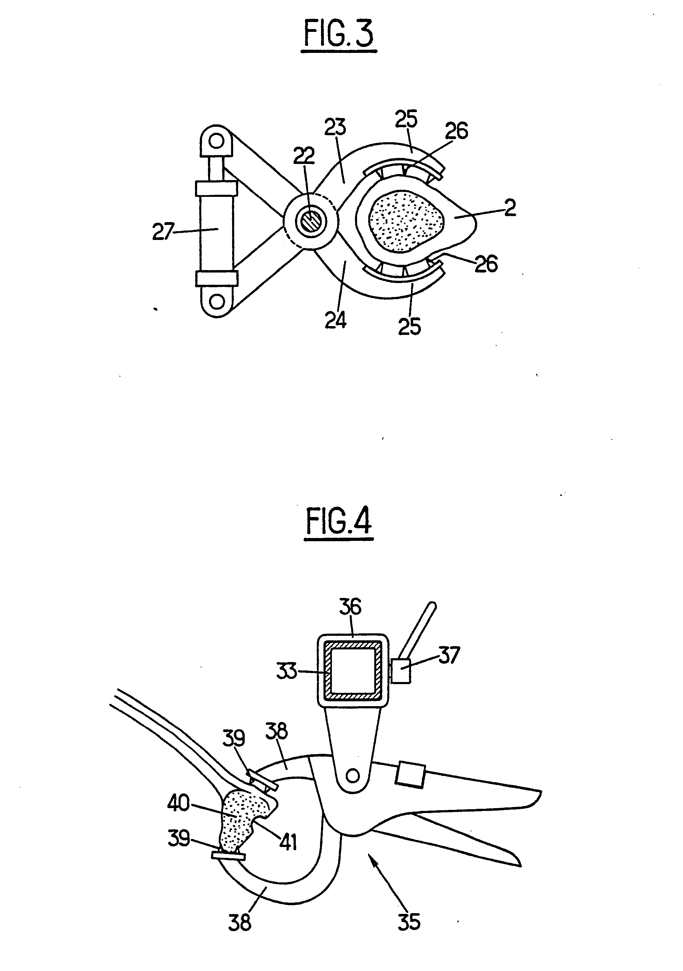

Sur l'un des montants latéraux 11 qui se trouve en position haute sur la figure 1, est monté un axe de rotation 22 au voisinage de l'extrémité dudit montant. Cet axe qui se prolonge sur une courte distance vers l'intérieur du cadre 10 parallèlement à la traverse 13, sert de pivot aux deux mâchoires 23 et 24 dont les extrémités légèrement arrondies 25 présentent intérieurement des pointes 26 (voir figure 3) qui viennent enserrer la crosse arrière 2 comme on peut le voir notamment sur la figure 1. Le serrage des branches 23 et 24 se fait au moyen d'un petit vérin hydraulique 27.

L'autre montant latéral 12 comporte un axe 28 qui est coaxial à l'axe 22 du montant 11 et porte, à l'intérieur du cadre 10, un plateau rotatif 29 qui peut être entraîné par le moteur électrique 30 au moyen d'une transmission comportant une chaîne 31 et un engrenage 32 reliant l'axe 28 situé à l'extrémité du montant latéral 12 et le moteur 30 monté à l'extérieur du montant 12 sur la traverse 13.

Une barre de rigidification 33 de profil courbe est fixée à l'une de ses extrémités à la périphérie du plateau rotatif 29. L'extrémité libre de la barre 33 est télescopique. A cet effet, une portion d'extrémité 34 peut coulisser à l'intérieur de l'extrémité creuse de la barre 33 et être immobilisée en position convenable par des moyens non représentés. De cette manière, la longueur totale de la barre de rigidification 33 y compris la portion d'extrémité 34, peut être adaptée à la longueur de la colonne vertébrale des demi-carcasses à traiter.

Sur sa longueur, la barre de rigidification 33 comporte une pluralité de pinces 35 visibles en détail sur la coupe de la figure 4. Les pinces 35 sont montées sur des coulisseaux 36 qui peuvent être maintenus en position sur la barre 33 par des vis de serrage 37.

Comme on peut le voir sur la figure 4, les extrémités de serrage des branches 38 de chaque pince 35 comportent intérieurement des pointes 39. Les branches 38 sont conformées de façon à pouvoir enserrer la colonne vertébrale sectionnée 40 dont on aperçoit le trou de moelle 41 sur la figure 4, l'action de serrage se faisant depuis les deux côtés extérieurs de la colonne vertébrale sectionnée 40.

Dans l'exemple illustré sur les figures, cinq pinces 35 sont disposées sur la partie fixe de la barre de rigidification 33, une pince supplémentaire 42 étant montée sur la portion d'extrémité 34. Cette dernière pince 42 qui est identique aux pinces 35, vient enserrer les dernières vertèbres ou vertèbres coxales de la demi-carcasse.

Compte tenu de la forme générale courbe de la barre de rigidification 33, cette dernière peut suivre le profil également légèrement courbe de la colonne vertébrale 40 comme on le voit sur la figure 1. Les premières pinces 35 se trouvant dans la zone courbe de la barre 33 au voisinage de son extrémité fixée au plateau rotatif 29 viennent donc enserrer les vertèbres cervicales. Les pinces suivantes qui se trouvent à proximité ou sur la position rectiligne de la barre 33 viennent enserrer les vertèbres lombaires.

Dans ces conditions, la colonne vertébrale 40 se trouve maintenue par plusieurs points de serrage et parfaitement supportée par la barre de rigidification 33.

La traverse 13 présente une portion télescopique équipée d'un vérin de commande 43 qui permet donc de faire varier la longueur totale de la traverse 13, c'est-à-dire l'écartement relatif des montants latéraux 11 et 12. Etant donné que la pince 23, 24 qui enserre la crosse arrière 2 est solidaire du montant 11 tandis que la barre de rigidification 33 qui enserre la colonne vertébrale 40 est solidaire par son extrémité de l'autre montant latéral 12, une augmentation de la longueur totale de traverse 13 sous l'action du vérin 43 provoque la mise en traction· de la demi-carcasse 1.

Un arceau rigide 44 en forme de demi-rectangle est en outre monté entre la portion d'extrémité 34 de la barre de rigidification 33 et l'axe 22 de façon à diminuer le porte-à-faux de la demi-carcasse 1 maintenue par la barre 33. Dans l'exemple illustré, l'arceau 44 se trouve disposé en direction de la partie ventrale de la demi-carcasse 1. Il est monté par un manchon coulissant 45 sur la portion d'extrémité 34.

Un secteur denté 46 est solidaire de la traverse 13 sur le côté extérieur de cette dernière, c'est-à-dire à l'opposé des montants 11 et 12, ce secteur denté 46 ayant le pivot 16 comme axe. Un pignon 47 pouvant tourner autour d'un axe solidaire du bras oscillant 14 peut être entraîné en rotation par le moteur 48 monté également sur le bras 14.

Le fonctionnement de l'ensemble du dispositif est alors le suivant. Une demi-carcasse est approchée en position verticale suspendue par sa crosse arrière 2 et pouvant se déplacer sur le rail d'amenée 5. Le cadre mobile 10 se trouve dans la position verticale représentée sur la figure 1 et le chariot 8 est en butée à l'extrémité du rail 7. Par rapport à la figure 1, on a effectué une rotation de 180° du plateau rotatif 29 qui a entraîné dans son mouvement la barre 33, l'arceau 44 et l'axe 22 qui porte la pince 23, 24. Cette pince se trouve donc en position convenable pour venir enserrer la crosse arrière. On agit alors sur le vérin 27 de façon à serrer la pince 23, 24.

On fixe ensuite les six pinces 35, 42 sur la colonne vertébrale sectionnée 40 de la demi-carcasse 1. Pendant cette opération, il est possible de déplacer chaque pince 35, 42 en position convenable le long de la barre 33, 34 selon la conformation de la demi-carcasse à traiter.

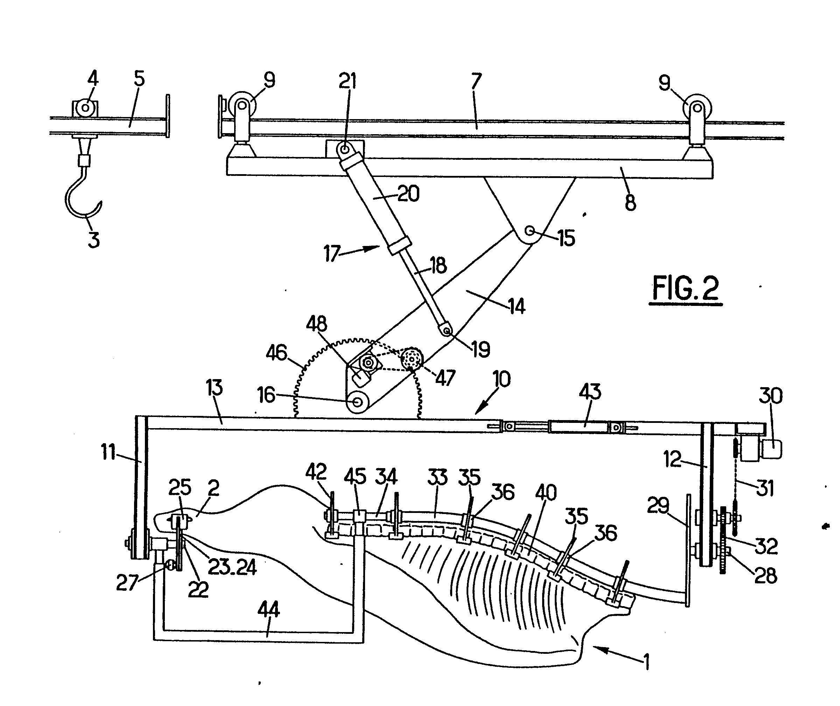

La demi-carcasse 1 étant ainsi fixée sur le cadre mobile 1, on retire le crochet d'amenée 3. On met ensuite en extension la demi-carcasse 1 en agissant sur le vérin 43. Après cette opération, le moteur 48 est actionné de façon à entraîner le pignon 47 qui provoque la rotation du secteur denté 46 et de l'ensemble du cadre mobile 10 autour de l'axe 16 solidaire du bras oscillant 14. Le cadre mobile 10 se trouve alors dans la position horizontale illustrée sur la figure 2. Une rotation de 180° du plateau 29 qui entraîne comme on l'a dit précédemment la rotation de la barre 33, de l'arceau 44 et de l'axe 22 entraîne également la rotation de la demi-carcasse 1 autour de son axe, de façon à la placer dans la position illustrée sur les figures 1 et 2.

Dans la position horizontale illsutrée sur la figure 2, la demi-carcasse est prête pour être déplacée avec son dispositif de support le long du rail 7 jusqu'au premier poste de l'installation puis successivement devant chacun des postes. A chacun de ces postes, un opérateur peut aisément prélever manuellement les différents muscles de la carcasse en séparant les muscles des os retenus par le dispositif de support. Pour faciliter son travail, l'opérateur peut, à chacun des postes de l'installation, provoquer un déplacement de la carcasse 1 lui permettant de prélever les muscles à l'endroit voulu et à la hauteur désirée. Dans ce but l'opérateur peut faire subir à la carcasse plusieurs mouvements. Il peut tout d'abord modifier la hauteur de la carcasse et de l'ensemble du cadre mobile 10 par rapport au sol par un mouvement combiné du pignon 47 agissant sur le secteur denté 46 et du vérin 17 modifiant l'orientation du bras oscillant 14. Une telle combinaison de mouvement permet soit de maintenir la traverse 13 horizontale, soit d'incliner celle-ci dans un sens ou dans l'autre par rapport à l'horizontale. Par ailleurs, une action sur le moteur 30 permet de faire subir à la demi-carcasse 1 une rotation autour des axes 22 et 28 qui correspondent sensiblement à l'axe de symétrie de la demi-carcasse. Plusieurs opérateurs peuvent également travailler simultanément à chaque poste.

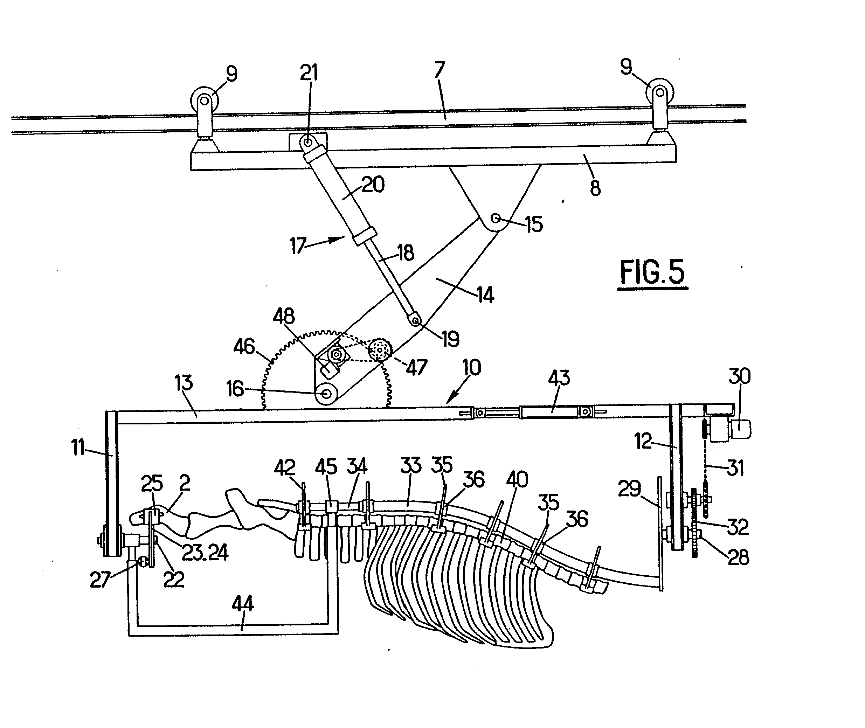

Lorsque tous les muscles ont ainsi été successivement prélevés il ne reste plus comme on peut le voir sur la figure 5 que le squelette de la demi-carcasse qui se trouve maintenu par les différentes pinces 35, 42 et 23, 24.

On comprend donc que dans le procédé selon l'invention, les muscles sont chaque fois prélevés pratiquement sans toucher l'os et qu'il s'agit donc d'une opération tout à fait différente des opérations classiques de désossage. Les muscles se trouvent toujours en position pour un prélèvement aisé par l'opérateur. Au dernier poste illustré sur la figure 5, il suffit alors de desserrer l'ensemble des pinces de serrage pour enlever le squelette restant. Le dispositif est alors prêt pour venir saisir une nouvelle demi-carcasse.

Bien entendu, une installation complète se compose d'une pluralité de dispositifs de support identiques tel que celui qui vient d'être décrit et plusieurs opérateurs réalisent plusieurs opérations successives en différents postes de traitement de l'installation.

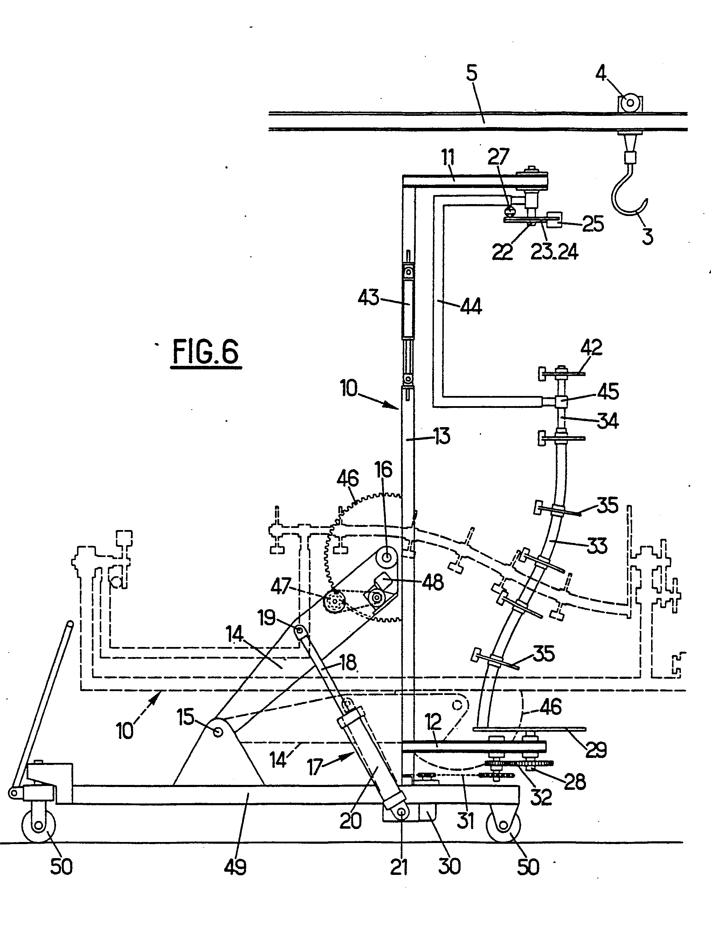

Sur la variante de la figure 6 où les pièces identiques portent les mêmes références, le cadre mobile 10 est monté sur un bâti en forme de chariot 49 qui peut être déplacé sur le sol au moyen de roulettes 50. Dans cette variante, on a représenté sur la figure 6 en trait plein la position du cadre mobile 10 avec la traverse 13 verticale. Dans cette position, une demi-carcasse suspendue par sa crosse arrière du crochet 3 qui peut se déplacer sur le rail d'amenée 5 peut être saisie comme il a été expliqué précédemment puis, après serrage des différentes pinces 35, 42, 23, 24 être mise en extension par le vérin 43. Le basculement en position horizontale représentée en tirets sur la figure 6 est obtenue par l'action du pignon 47 qui entraîne la rotation du secteur denté 46. Dans la position en tirets illustrée sur la figure 6, le bras oscillant 14 a en outre été placé en position sensiblement horizontale par action sur le vérin 17.

L'ensemble du dispositif de support peut ainsi être déplacé le long de différents postes d'une installation, les muscles étant successivement prélevés comme précédemment. Là encore l'opérateur peut à chaque poste faire subir à la demi-carcasse une rotation ou modifier sa hauteur en agissant sur les différents moyens de commande dont il dispose.

Dans les deux variantes, des moyens qui n'ont pas été illustrés sur les figures peuvent être avantageusement prévus pour faciliter la commande de différents mouvements par l'opérateur, par exemple au moyen de pédales ou leviers de commande à accès rapide.

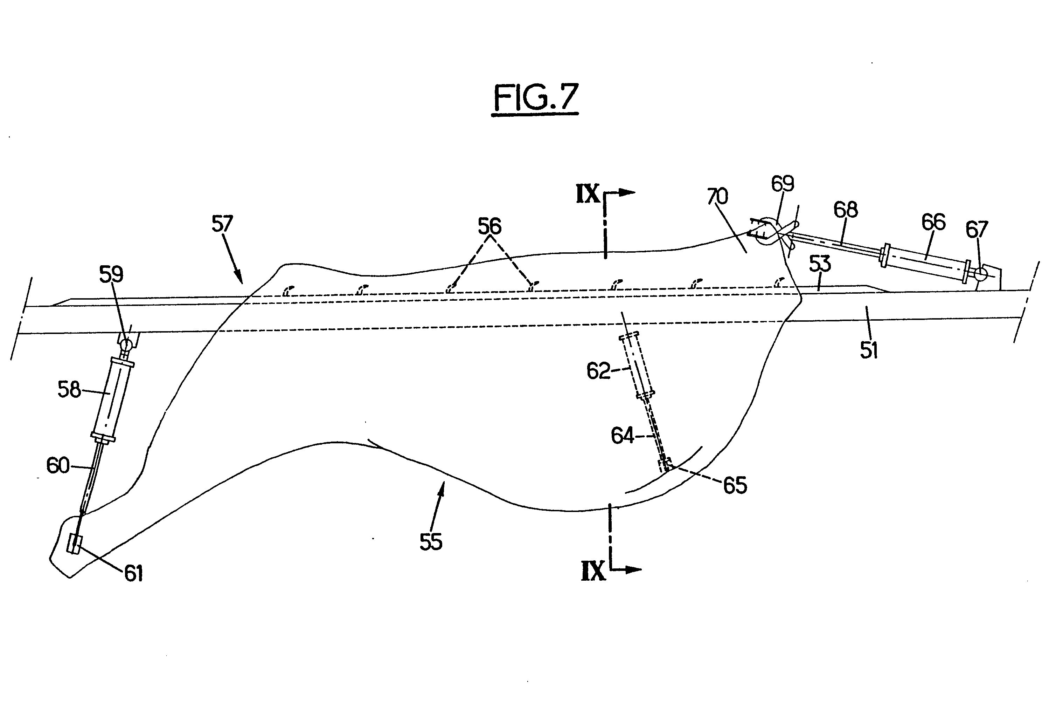

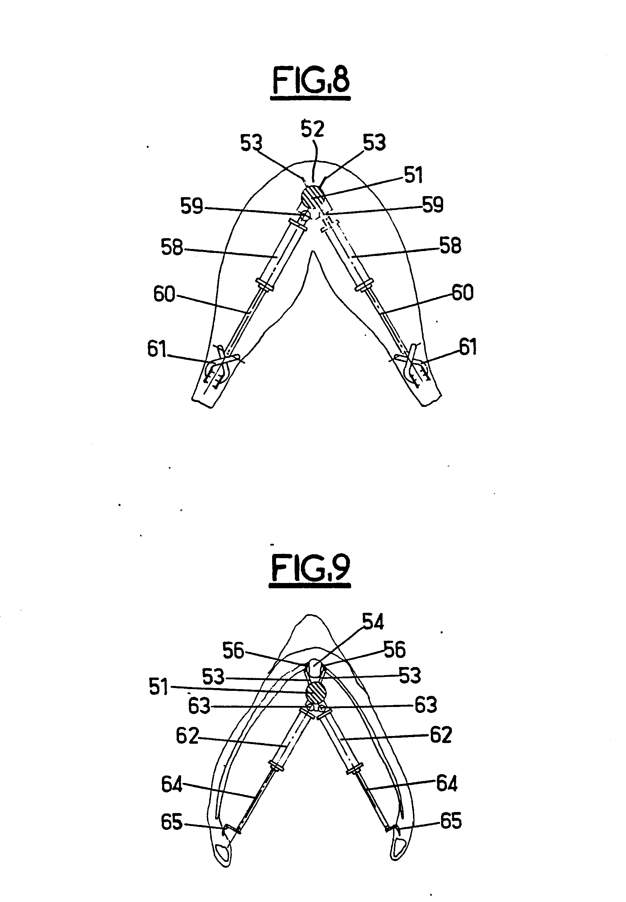

Les figures 7 à 14 illustrent une variante de dispositif de support selon l'invention. Comme on peut le voir sur les figures 7, 8 et 9, le dispositif comprend essentiellement une barre de support 51 qui peut être mise en position sensiblement horizontale et qui présente sur sa face supérieure une gorge longitudinale 52 formée par deux ailettes inclinées 53. L'inclinaison des ailettes 53 et leur position définissent la forme et les dimensions de la gorge longitudinale 52 de façon que cette dernière puisse recevoir au moins des portions de la surface interne de la colonne vertébrale 54 de la carcasse entière 55 comme on peut le voir en particulier sur la coupe de la figure 9. Une pluralité de dents d'accrochage 56 visibles sur les figures 7 et 9 viennent en outre coopérer par griffage avec les faces latérales de la colonne vertébrale 54 améliorant ainsi le maintien de la carcasse sur la barre de support 51.

La carcasse entière 55 est simplement posée sur la barre 51 maintenue en position horizontale, l'extrémité arrière de ladite barre 51 traversant l'os du bassin ou passage du quasi dans la zone référencée 57 sur la figure 7.

Pour améliorer le maintien de la carcasse 55 sur la barre de support 51, on a illustré dans l'exemple de la figure 7 un certain nombre de vérins de traction qui permettent de placer en extension certaines portions de la carcasse 55 facilitant ainsi son maintien, en particulier lorsque l'on procède à une rotation partielle de la carcasse autour de l'axe de la barre de support 51 afin d'amener certaines portions de ladite carcasse en position favorable pour le prélèvement des muscles. Comme on peut le voir sur les figures 7 à 9, le dispositif tel qu'il est illustré comporte une paire de vérins de poussée arrière 58 articulés chacun par un dispositif à rotule 59 sur la face inférieure de la barre de support 51. Les tiges 60 des vérins 58 présentent des pinces 61 qui viennent s'accrocher sur les extrémités des crosses arrières de la carcasse 55. Comme on peut le noter sur la figure 7, l'articulation 59 est disposée de façon que l'effort d'extension dû aux deux vérins de poussée 58 s'exerce de l'avant vers l'arrière. De plus, le montage des deux vérins 58 est tel comme on peut le voir sur la figure 8 que les deux crosses arrières sont maintenues en extension convenablement écartées.

Deux vérins de poussée avant 62 sont articulés au moyen de dispositifs à rotule 63 de la même manière que les vérins 58 sous la barre de support 51. Leur tige 64 présente des griffes 65 qui viennent s'accrocher dans les extrémités des côtes au voisinage de la zone du sternum. La disposition des deux vérins 62 permet comme on peut le voir sur la figure 9 d'exercer un effort de poussée sur les deux côtés de la carcasse en ouvrant celle-ci. De plus, l'effort s'exerce comme on peut le voir sur la figure 7 en direction légèrement inclinée de l'arrière vers l'avant.

Dans le mode de réalisation illustré, le dispositif comporte en outre un vérin de traction 66 articulé sur un dispositif à rotule 67 monté sur la face supérieure de la barre de support 51. La tige 68 de ce vérin comporte à son extrémité une pince 69 qui vient se fixer sur le collier 70 de la carcasse 65 de façon à redresser ce dernier en direction de la barre horizontale 51. Dans le cas où le collier est initialement découpé, le vérin 66 peut bien entendu être supprimé.

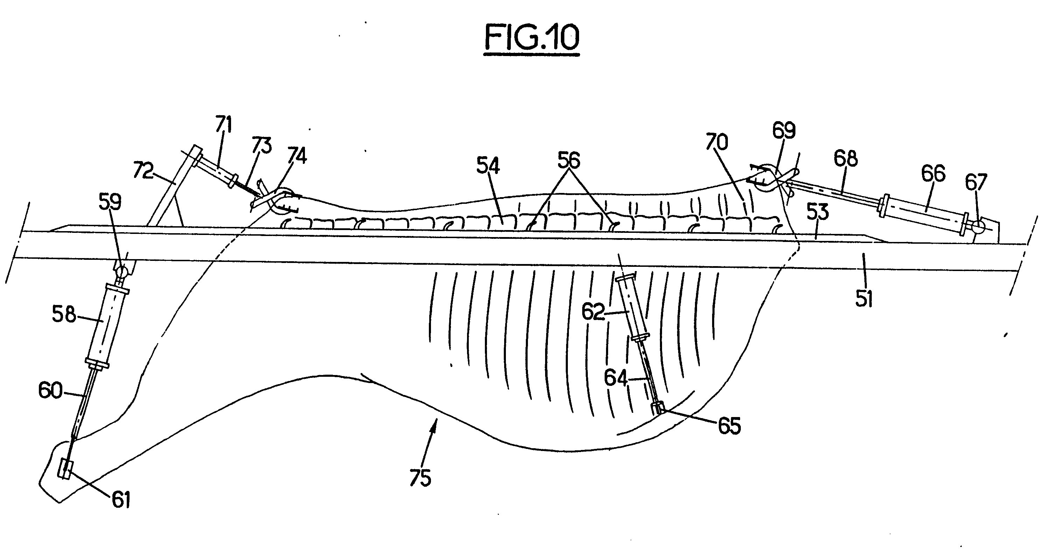

Dans la variante illustrée sur la figure 10 sur laquelle les éléments identiques portent les mêmes références que sur la figure 7, un dispositif de support analogue est utilisé pour le traitement d'une demi-carcasse 75. Dans ce cas comme précédemment, la colonne vertébrale 54 qui est ici sectionnée longitudinalement vient se loger en partie dans la gorge longitudinale formée par les ailettes 53. Le maintien de la demi-carcasse est favorisé par les griffes 56. On peut en outre avantageusement prévoir dans ce cas un vérin de traction supplémentaire 71 monté sur un support 72 solidaire de la face supérieure de la barre de support 51 au voisinage de son extrémité arrière. La tige 73 du vérin 71 comporte à son extrémité une pince 74 qui vient s'accrocher sur l'os de la queue de façon à améliorer le maintien de la demi-carcasse 75 sur la barre de support horizontale 51. Bien entendu, dans ce cas, les moyens d'extension sont constitués par des vérins de poussée uniques 58 et 62 qui remplacent les paires de vérins utilisés dans le cas de la carcasse entière 55 comme illustré sur les figures 7 à 9.

Les figures 11 à 14 illustrent deux exemples du passage d'une carcasse de la position verticale à la position horizontale en vue de son traitement au moyen d'un dispositif de support tel qu'illustré sur les figures 7 à 9.

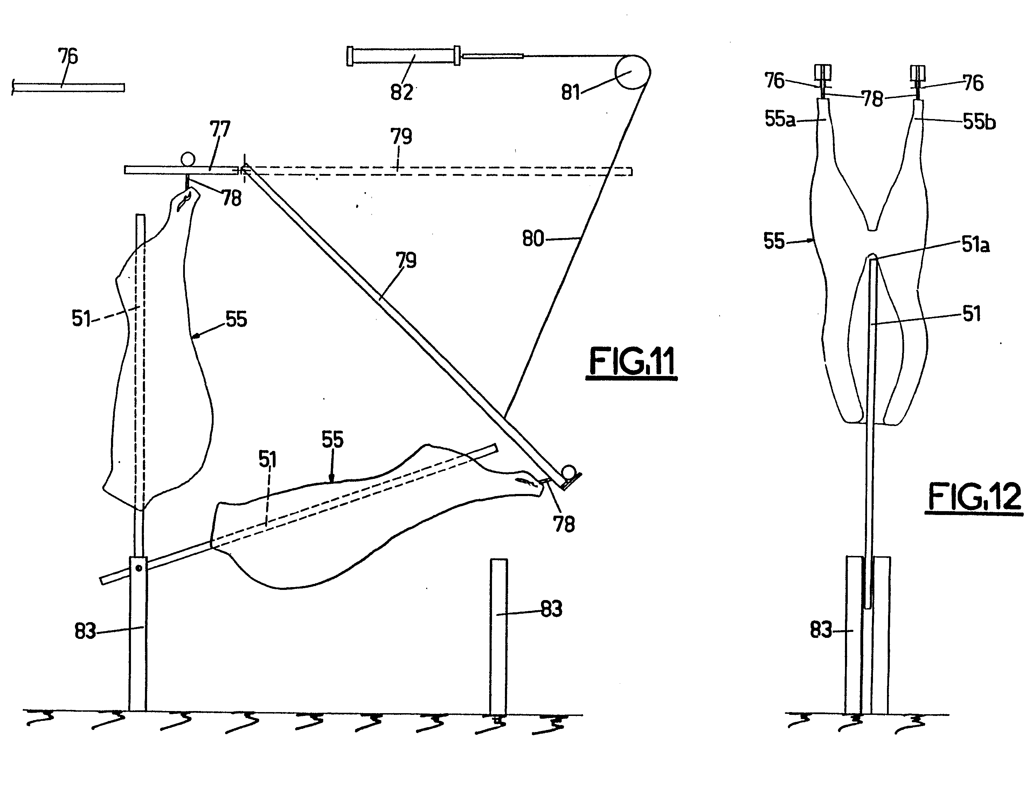

Tel qu'illustré sur les figures 11 et 12, la carcasse 55 est suspendue par ses deux crosses arrières 55a, 55b sur deux rails de manutention 76 par des crochets 78 comme on peut le voir en particulier sur la figure 12. La carcasse 55 est déplacée sur les rails 76 jusqu'à ce qu'elle parvienne au-dessus de la barre de support 51 qui a été pivotée de façon à se trouver verticale comme illustré sur la figure 11. Dans son mouvement, la carcasse 55 vient enserrer la barre 51 en position verticale, cette dernière pénétrant dans la carcasse par la cage thoracique. L'extrémité supérieure 51a de la barre de support 51 se trouve initialement dans une position suffisamment basse par rapport à la carcasse 55 suspendue par les rails 76 pour que cette extrémité 51a puisse également pénétrer à l'intérieur de la carcasse 55.

On fait alors descendre par une translation verticale une portion 77 des rails de manutention 76. Ce mouvement de descente vers le bas, qui est également celui de la carcasse 55, provoque la pénétration de la barre de support 51 verticale par son extrémité supérieure 51a dans le passage du quasi, c'est-à-dire par l'os du bassin de la carcasse 55.

Une fois cette opération effectuée, on provoque la descente des crochets 78 sur des portions articulées 79 des rails de manutention, ce mouvement étant guidé progressivement au moyen d'un câble de traction 80 passant sur une poulie 81 et maintenu par un vérin 82 à action progressive. Ce mouvement pivotant entraîne un pivotement simultané de la barre de support 51 qui se retrouve finalement en position horizontale sur ses supports 83, la carcasse 55 étant maintenue comme sur la figure 7.

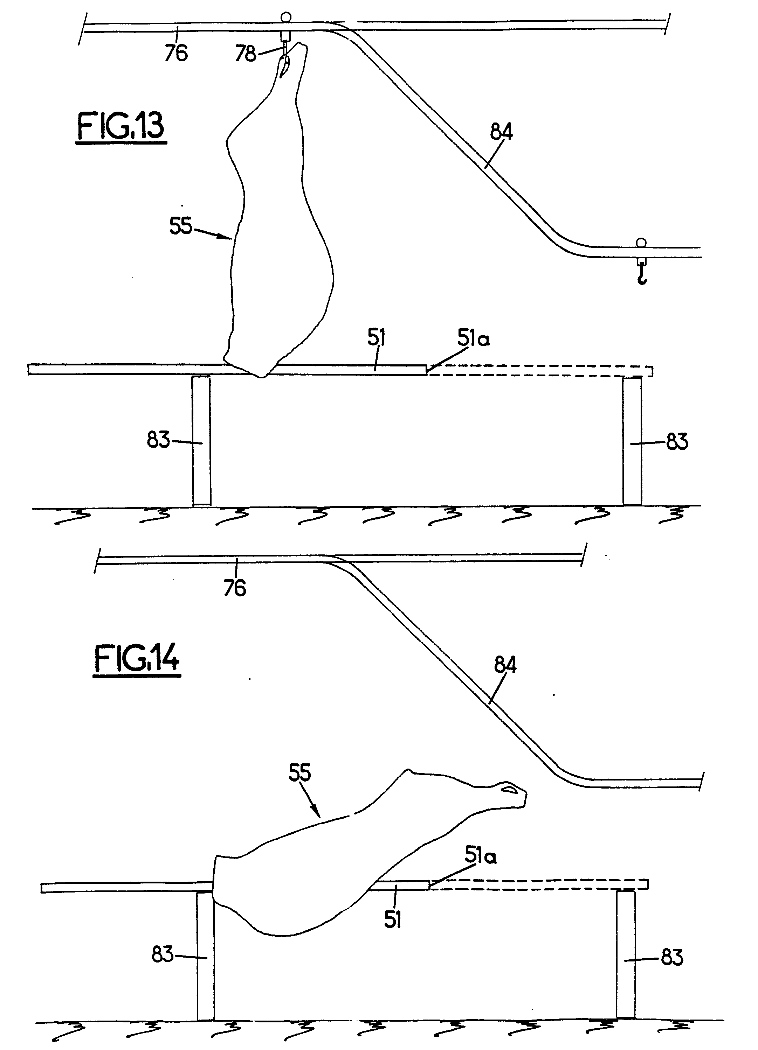

Dans le mode de réalisation des figures 13 et 14, la carcasse 55 maintenue comme précédemment par les deux crosses arrières en position suspendue au moyen des rails de manutention 76 et des crochets 78, est amenée au-dessus de la barre de support 51 qui reste horizontale, mais qui est déplacée vers la gauche sur la figure 13, par exemple au moyen d'une portion télescopique ou d'une portion d'extrémité mobile. L'extrémité avant de la colonne vertébrale de la carcasse 55 venant d'ores et déjà prendre appui sur la barre 51, les crochets 78 sont déplacés progressivement vers le bas au moyen d'une portion inclinée 84 des rails de manutention 76 jusqu'à ce que la carcasse atteigne une position sensiblement horizontale dans laquelle l'extrémité 51a de la barre de support 51 se trouve à gauche du passage du quasi par rapport aux figures 13 et 14. On fait alors coulisser la barre horizontale 51 de la gauche vers la droite de façon que l'extrémité 51a pénètre par ledit passage et ressortant à l'extérieur, puisse venir s'appuyer sur les supports 83 comme illustré sur la figure 14.

**Revendications**

1. Procédé de traitement de carcasse ou de demi-carcasse de bovin ou autre quadrupède, se présentant suspendue verticalement, caractérisé par le fait que l'on fait passer la carcasse ou la demi-carcasse de sa position verticale suspendue à une position sensiblement horizontale dans laquelle on la maintient supportée par la colonne vertébrale, on prélève les muscles successivement à partir de la carcasse ou de la demi-carcasse sans procéder à un désossage substantiel intermédiaire de façon qu'à la fin du prélèvement des muscles, seul, le squelette de la carcasse ou de la demi-carcasse reste maintenu supporté dans sa position horizontale.

2. Procédé selon la revendication 1, caractérisé par le fait que l'on exerce entre au moins certaines portions de la carcasse ou de la demi-carcasse un effort d'extension de façon à maintenir et rigidifier la carcasse ou la demi-carcasse.

3. Procédé selon la revendication 2, caractérisé par le fait que l'on exerce un effort de traction sur une demi-carcasse entre son extrémité correspondant à la crosse arrière et plusieurs endroits de la colonne vertébrale sectionnée longitudinalement de façon à maintenir et rigidifier la demi-carcasse puis que l'on prélève manuellement la viande en laissant les os attachés directement à la colonne vertébrale maintenue en traction.

4. Procédé selon la revendication 3, caractérisé par le fait que les efforts d'extension sont exercés sur la demi-carcasse en position verticale avant de la faire passer en position horizontale.

5. Procédé selon la revendication 1, caractérisé par le fait que l'on fait traverser l'os du bassin de la carcasse par un organe de support qui peut être placé en position sensiblement horizontale et sur lequel vient s'appuyer la face interne de la colonne vertébrale sous l'effet de la gravité pendant toute l'opération de prélèvement des muscles.

6. Procédé selon la revendication 1, caractérisé par le fait que l'on place la face interne de la colonne vertébrale de la demi-carcasse en appui sur un organe de support qui peut être placé en position sensiblement horizontale et qui comporte des moyens de retenue, la demi-carcasse étant maintenue dans cette position pendant toute l'opération de prélèvement des muscles.

7. Procédé selon la revendication 5 ou 6, caractérisé par le fait que l'on exerce un effort d'extension sur la ou les crosses arrières et sur au moins une zone proche du sternum de la carcasse ou de la demi-carcasse, celle-ci restant en appui par la face interne de la colonne vertébrale sur l'organe de support.

8. Procédé selon la revendication 7, caractérisé par le fait que l'on exerce un effort de traction sur le collier de façon à le redresser en direction de l'horizontale.

9. Procédé selon la revendication 7 ou 8, caractérisé par le fait que l'on exerce un effort de traction sur l'os de la queue dans le cas d'une demi-carcasse.

10. Procédé selon la revendication 1, caractérisé par le fait que l'on découpe initialement la ou les épaules de la carcasse ou de la demi-carcasse et/ou le collier.

11. Procédé selon la revendication 5, caractérisé par le fait que la carcasse suspendue verticalement par les deux crosses arrières sur des rails de manutention est amenée au-dessus de l'organe de support horizontal, la portion interne voisine du collier venant prendre appui sur ledit organe, que l'on abaisse progressivement les deux crosses arrières jusqu'à ce que la carcasse soit sensiblement horizontale, la face interne de la colonne vertébrale venant s'appuyer sur ledit organe, puis que l'on fait coulisser une portion d'extrémité mobile de l'organe de support en le faisant pénétrer par le passage de l'os du bassin.

12. Procédé selon la revendication 5, caractérisé par le fait que la carcasse suspendue verticalement par les deux crosses arrières sur des rails de manutention est amenée au-dessus de l'organe de support en position verticale, la carcasse est déplacée verticalement relativement à l'organe de support de façon que ce dernier pénètre par le passage de l'os du bassin, puis on abaisse progressivement les crosses arrières et simultanément l'organe de support de façon à le mettre en position horizontale.

13. Procédé selon l'une quelconque des revendications précédentes caractérisé par le fait que le prélèvement des muscles sur la carcasse ou la demi-carcasse en position horizontale se fait à un poste de travail fixe par prélèvements manuels successifs de l'ensemble des muscles.

14. Procédé selon l'une quelconque des revendications 1 à 12, caractérisé par le fait que la carcasse ou la demi-carcasse est maintenue par un dispositif de support permettant le déplacement devant plusieurs postes d'une installation de prélèvement des muscles.

15. Installation de traitement de carcasses ou demi-carcasses de bovins ou autres quadrupèdes comprenant au moins un dispositif de support muni d'une barre de support (51) de la carcasse ou de la demi-carcasse en position horizontale, caractérisée par le fait que la barre de support comporte une pluralité de dents d'accrochage (56) venant coopérer avec les faces latérales de la colonne vertébrale et que le dispositif de support comporte : au moins un vérin de poussée arrière (58) articulé à rotule sur la barre de support et dont la tige (60) présente des moyens d'accrochage (61) sur au moins la crosse arrière ; au moins un vérin de poussée avant (62) articulé à rotule sur la barre de support et dont la tige (64) présente des moyens d'accrochage (65) sur au moins une zone voisine du sternum ; que l'installation comprend en outre des moyens de transfert pour faire passer la carcasse ou la demi-carcasse d'une position initiale verticale suspendue à la position horizontale sur la barre de support, lesdits moyens de transfert comprenant des moyens pour déplacer la barre de support jusqu'au contact avec au moins des portions des faces latérales de la colonne vertébrale de la carcasse suspendue et des moyens pour abaisser progressivement le point de suspension de la carcasse jusqu'à ce qu'elle se trouve en position horizontale.

16. Installation selon la revendication 15, adaptée au cas d'une carcasse, caractérisée par le fait que les moyens de transfert comprennent des moyens pour faire pivoter la barre de support depuis une position verticale jusqu'à une position horizontale et des moyens pour abaisser la carcasse initialement suspendue au-dessus de la barre de support verticale jusqu'à ce que son extrémité pénètre par le passage du quasi.

17. Installation selon la revendication 15 adaptée au cas d'une carcasse, caractérisée par le fait que les moyens de transfert comprennent des moyens pour déplacer en translation la barre de support, de façon à pouvoir faire coulisser ladite barre dans le passage du quasi après que la carcasse ait été progressivement abaissée jusqu'à la position horizontale.

18. Installation selon la revendication 17, caractérisée par le fait que le dispositif de support comprend en outre un vérin de redressement du collier, articulé à rotule sur la face supérieure de la barre au voisinage de son extrémité avant.

19. Installation selon la revendication 17 ou 18, caractérisée par le fait que le dispositif de support comporte un vérin de traction de l'os de la queue monté sur un support solidaire de la face supérieure de la barre au voisinage de son extrémité arrière.

20. Installation selon l'une quelconque des revendications 15 à 19, caractérisée par le fait que le dispositif de support comporte des moyens pour provoquer une rotation de la barre autour de son axe entraînant une rotation de la carcasse ou de la demi-carcasse afin de présenter chaque portion en position pour le prélèvement des muscles.

21. Installation selon l'une quelconque des revendications 15 à 20, caractérisée par le fait qu'elle comporte des moyens pour provoquer un déplacement relatif vertical d'ensemble de la carcasse ou de la demi-carcasse maintenue sur le dispositif de support par rapport à l'opérateur afin de présenter chaque portion en position pour le prélèvement des muscles.

22. Installation de prélèvement de muscles sur une demi-carcasse de bovin ou autre quadrupède au moyen d'un cadre mobile, caractérisée par le fait qu'elle comprend un cadre mobile (10) comprenant une traverse longitudinale munie à ses extrémités de deux montants latéraux (11, 12) ; un moyen de serrage (23, 24) monté sur un axe de rotation (22) solidaire de l'un des montants latéraux (11) et adapté pour venir enserrer la partie extrême de la demi-carcasse correspondant à la crosse arrière (2) ; une barre de rigidification de profil courbe (33, 34) présentant plusieurs pinces (35, 42) adaptées pour enserrer les vertèbres sectionnées longitudinalement de la demi-carcasse en plusieurs endroits de la colonne vertébrale, une extrémité de la barre de rigidification étant fixée de manière excentrée sur un plateau rotatif (29) monté sur le deuxième montant latéral (12) ; des moyens (43) pour faire varier l'écartement entre le moyen de serrage (23, 24) et au moins certaines des pinces précitées (35, 42) de façon à provoquer un effort de traction et de raidissement de la demi-carcasse ; et des moyens pour faire tourner le cadre mobile d'une position verticale à une position horizontale.

23. Installation selon la revendication 22, caractérisée par le fait que le cadre (10) présente une partie télescopique dont la longueur peut être modifiée par l'action d'un vérin de commande (43).

24. Installation selon les revendications 22 ou 23, caractérisée par le fait que les pinces (35) sont montées sur la barre de rigidification (33) de façon à pouvoir coulisser le long de ladite barre, des moyens étant prévus pour les immobiliser en des endroits déterminés.

25. Installation selon l'une des revendications 22 à 24, caractérisée par le fait que l'extrémité libre de la barre de rigidification est télescopique (34) de façon à pouvoir modifier la longueur totale de ladite barre.

26. Installation selon l'une des revendications 22 à 25, caractérisée par le fait que le cadre mobile (10) comprend un secteur denté (46) pouvant être entraîné de façon à permettre la rotation du cadre (10) sur environ 90° depuis une position de prise de la demi-carcasse verticale jusqu'à une position de prélèvement des muscles sensiblement horizontale.

27. Installation selon l'une des revendications 22 à 26, caractérisée par le fait que l'extrémité libre de la barre de rigidification (33, 34) est reliée par un arceau (44) au montant latéral opposé (11) du côté de la crosse arrière (2).

28. Installation selon des revendications 22 à 27, caractérisée par le fait que le cadre mobile (10) est monté sur un bâti (8) pouvant être déplacé en translation devant différents postes de l'installation, la fixation du cadre (10) étant réalisée par au moins un bras oscillant (14) actionné par un vérin de commande (17).

29. Installation selon l'une des revendications 22 à 27, caractérisée par le fait que le cadre mobile (10) est monté sur un bâti (8) solidaire d'un chariot (49) permettant le déplacement en translation du dispositif devant différents postes de l'installation.

**Claims**

1. Method for the treatment of a carcass or a half-carcass of a bovine or other quadruped, presented suspended vertically, characterized in that the carcass or the half-carcass is caused to pass from its vertical suspended position to a substantially horizontal position in which it is held supported by the spinal column, and the muscles are successively removed from the carcass or the half-carcass without proceeding to a substantial intermediate deboning so that, at the end of the removal of the muscles, only the skeleton of the carcass or the half-carcass remains supported in its horizontal position.

2. Method according to Claim 1, characterized in that, between at least certain portions of the carcass or of the half-carcass, a tensile stress is exerted so as to hold and rigidify the carcass or the half-carcass.

3. Method according to Claim 2, characterized in that a tractive force is exerted on a half-carcass between its end corresponding to the knuckle and several points of the spinal column sectioned longitudinally so as to hold and rigidify the half-carcass, and in that the meat is removed manually, leaving the bones directly attached to the spinal column held in traction.

4. Method according to Claim 3, characterized in that tensile stresses are exerted on the half-carcass in a vertical position before it is caused to pass into a horizontal position.

5. Method according to Claim 1, characterized in that a support member, which can be placed in a substantially horizontal position and on which the internal surface of the spinal column rests under the effect of gravity throughout the muscle removal operation, is passed through the pelvic bone of the carcass.

6. Method according to Claim 1, characterized in that the internal surface of the spinal column of the half-carcass is placed so as to rest on a support member which can be placed in a substantially horizontal position and which comprises retention means, the half-carcass being held in this position throughout the muscle removal operation.

7. Method according to Claim 5 or 6, characterized in that a tensile stress is exerted on the knuckle or knuckles and on at least one region near to the sternum of the carcass or of the half-carcass, the latter remaining rested, by means of the internal surface of the spinal column, on the support member.

8. Method according to Claim 7, characterized in that a tractive force is exerted on the collar so as to set it in the direction of the horizontal.

9. Method according to Claim 7 or 8, characterized in that a tractive force is exerted on the tail bone in the case of a half-carcass.

10. Method according to Claim 1, characterized in that the shoulder or shoulders of the carcass or the half-carcass and/or the collar are cut up first of all.

11. Method according to Claim 5, characterized in that the carcass, suspended vertically by the two knuckles on handling rails, is brought above the horizontal support member, the internal portion near the collar coming to rest on the said member, in that the two knuckles are lowered progressively until the carcass is substantially horizontal, the internal surface of the spinal column coming to rest on the said member, and in that a movable end portion of the support member is caused to slide, causing it to penetrate through the aperture of the pelvic bone.

12. Method according to Claim 5, characterized in that the carcass, suspended vertically by the two knuckles on handling rails, is brought above the support member in a vertical position, the carcass is displaced vertically relative to the support member so that the latter penetrates through the aperture of the pelvic bone, and the knuckles and the support member are lowered progressively and simultaneously so as to place it in a horizontal position.

13. Method according to any one of the preceding Claims, characterized in that the removal of muscles on the carcass or the half-carcass in a horizontal position is performed at a fixed work station by successive manual removal operations of all the muscles.

14. Method according to any one of Claims 1 to 12, characterized in that the carcass or the half-carcass is held by a support device permitting displacement in front of several stations of an installation for muscle removal.

15. Installation for treatment of carcasses or half-carcasses of bovines or other quadrupeds, comprising at least one support device equipped with a support bar (51) for the carcass or the half-carcass in a horizontal position, characterized in that the support bar comprises a plurality of catching teeth (56) which interact with the lateral surfaces of the spinal column and in that the support device comprises : at least one rear thrust jack (58) swivel-jointed on the support bar, and the rod (60) of which has means for catching (61) on at least the knuckle ; at least one front thrust jack (62) swivel-jointed on the support bar, and the rod (64) of which has means for catching (65) on at least one region near the sternum ; in that the installation further comprises transfer means for causing the carcass or the half-carcass to pass from an initial vertical suspended position to the horizontal position on the support bar, the said transfer means comprising means for displacing the support bar until contact is made with at least portions of the lateral surfaces of the spinal column of the suspended carcass, and means for progressively lowering the suspension point of the carcass until it is in a horizontal position.

16. Installation according to Claim 15, adapted to the case of a carcass, characterized in that the transfer means comprise means for causing the support bar to pivot from a vertical position to a horizontal position and means for lowering the carcass initially suspended above the vertical support bar until its end penetrates through the upper leg aperture.

17. Installation according to Claim 15, adapted to the case of a carcass, characterized in that the transfer means comprise means for displacing the support bar in translation so as to cause the said bar to slide in the upper leg aperture after the carcass has been progressively lowered to the horizontal position.

18. Installation according to Claim 17, characterized in that the support device also comprises a jack for setting the collar upright, swivel-jointed on the upper surface of the bar in the vicinity of its front end.

19. Installation according to Claim 17 or 18, characterized in that the support device comprises a traction jack for the tail bone mounted on a support which is an integral part of the upper surface of the bar in the vicinity of its rear end.

20. Installation according to any one of Claims 15 to 19, characterized in that the support device comprises means for causing a rotation of the bar about its axis causing a rotation of the carcass or of the half-carcass in order to present each portion in a position for muscle removal.

21. Installation according to any one of Claims 15 to 20, characterized in that it comprises means for causing a relative vertical displacement of all the carcass or of the half-carcass held on the support device with respect to the operator so as to present each portion in a position for muscle removal.

22. Installation for muscle removal on a half-carcass of a bovine or other quadruped by means of a movable frame, characterized in that it comprises a movable frame (10) comprising a longitudinal crosspiece equipped at its ends with two lateral mountings (11, 12) ; a gripping means (23, 24) mounted on an axis of rotation (22) which is an integral part of one of the lateral mountings (11) and is adapted to grip the end part of the half-carcass corresponding to the knuckle (2) ; a rigidification bar having a curved profile (33, 34) having several clamps (35, 42) adapted for gripping the longitudinally sectioned vertebrae of the half-carcass at several points of the spinal column, one end of the rigidification bar being fixed in an eccentric manner on a rotating plate (29) mounted on the second lateral mounting (12) ; means (43) for causing the space between the gripping means (23, 24) and at least certain of the abovementioned clamps (35, 42) to vary so as to give rise to a tractive force and a stiffening of the half-carcass ; and means for causing the movable frame to rotate from a vertical position to a horizontal position.

23. Installation according to Claim 22, characterized in that the frame (10) has a telescopic part, the length of which may be modified by the action of a control jack (43).

24. Installation according to Claims 22 or 23, characterized in that the clamps (35) are mounted on the rigidification bar (33) so as to be able to slide along the said bar, the means being provided for immobilizing them at specific points.

25. Installation according to one of Claims 22 to 24, characterized in that the free end of the rigidification bar is telescopic (34) so as to be able to modify the total length of the said bar.

26. Installation according to one of Claims 22 to 25, characterized in that the movable frame (10) comprises a toothed sector (46) enabling it to be moved so as to permit the rotation of the frame (10) through approximately 90° from a position of gripping the vertical half-carcass to a substantially horizontal muscle removal position.

27. Installation according to one of Claims 22 to 26, characterized in that the free end of the rigidification bar (33, 34) is linked by means of an arch (44) to the opposite lateral mounting (11) on the knuckle side (2).

28. Installation according to Claims 22 to 27, characterized in that the movable frame (10) is mounted on a support frame (8) which may be displaced in translation in front of various stations of the installation, the fixing of the frame (10) being achieved by means of at least one oscillating arm (14) activated by a control jack (17).

29. Installation according to one of Claims 22 to 27, characterized in that the movable frame (10) is mounted on a supporting frame (8) which is an integral part of a carriage (49) permitting the displacement in translation of the device in front of various stations of the installation.

**Patentansprüche**

1. Verfahren zur Bearbeitung von ganzen oder halben Schlachtkörpern von Rindern oder anderen Vierfüßern, die vertikal aufgehängt vorliegen, dadurch gekennzeichnet, daß man den ganzen oder halben Schlachtkörper aus seiner vertikal aufgehängten Lage in eine im wesentlichen horizontale Lage bringt, in der man ihn über die Wirbelsäule aufgehängt hält, daß man vom ganzen oder halben Schlachtkörper nacheinander die Muskeln ablöst, ohne zwischendurch eine nennenswerte Auslösung von Knochen vorzunehmen, derart, daß am Ende des Ablösens der Muskeln lediglich das Skelett des ganzen oder halben Schlachtkörpers in seiner horizontalen Lage aufgehängt verbleibt.

2. Verfahren nach Anspruch 1, dadurch gekennzeichnet, daß man wenigstens zwischen bestimmten Stellen des ganzen oder halben Schlachtkörpers eine Dehnkraft derart ausübt, daß der ganze oder halbe Schlachtkörper gehalten und versteift wird.

3. Verfahren nach Anspruch 2, dadurch gekennzeichnet, daß man auf eine Schlachthälfte zwischen ihrem dem Hinterbein entsprechenden Ende und mehrereren Stellen der Wirbelsäule, die in Längsrichtung geteilt ist, eine Zugkraft ausübt, um so die Schlachttierhälfte zu halten und zu versteifen, worauf man das Fleisch händisch ablöst, indem man die Knochen unmittelbar an der unter Zug gehaltenen Wirbelsäule beläßt.

4. Verfahren nach Anspruch 3, dadurch gekennzeichnet, daß die Dehnkräfte auf die Schlachthälfte in vertikaler Lage ausgeübt werden, bevor diese in die horizontale Lage gebracht wird.

5. Verfahren nach Anspruch 1, dadurch gekennzeichnet, daß man den Beckenknochen des Schlachtkörpers mit einem Stützorgan durchsetzt, das in eine im wesentlichen horizontale Lage gebracht werden kann und auf dem die Innenseite der Wirbelsäule unter der Wirkung der Schwerkraft während der gesamten Muskel-Ablösearbeit anliegt.

6. Verfahren nach Anspruch 1, dadurch gekennzeichnet, daß man die Innenseite der Wirbelsäule der Schlachthälfte gegen ein Stützorgan anlegt, das in eine im wesentlichen horizontale Lage gebracht werden kann und das Haltemittel besitzt, wobei die Schlachthälfte während der gesamten Muskel-Ablösearbeit in dieser Stellung gehalten wird.

7. Verfahren nach Anspruch 5 oder 6, dadurch gekennzeichnet, daß man eine Dehnkraft auf das oder die Hinterbeine und auf wenigstens einen Bereich in der Nähe des Brustbeines des ganzen oder halben Schlachtkörpers ausübt, wobei dieser über die Innenseite der Wirbelsäule auf dem Stützorgan aufliegt.

8. Verfahren nach Anspruch 7, dadurch gekennzeichnet, daß man eine Zugkraft auf den Hals ausübt, um diesen in horizontaler Richtung geradezurichten.

9. Verfahren nach Anspruch 7 oder 8, dadurch gekennzeichnet, daß man bei einer Schlachthäfte auf den Schwanzknochen eine Zugkraft ausübt.

10. Verfahren nach Anspruch 1, dadurch gekennzeichnet, daß man zunächst die Schulter oder die Schultern des ganzen oder halben Schlachtkörpers und/oder den Hals zerlegt.

11. Verfahren nach Anspruch 5, dadurch gekennzeichnet, daß der über die beiden Hinterbeine vertikal an Förderschienen aufgehängte Schlachtkörper über das horizontale Stützorgan bewegt wird, wobei der innere, dem Hals benachbarte Teil, in Anlage gegen dieses Organ gelangt, daß man nach und nach die beiden Hinterbeine absenkt, bis der Schlachtkörper im wesentlichen horizontal ausgerichtet ist, wobei die Innenfläche der Wirbelsäule in Anlage an das genannte Organ gelangt, und daß man hierauf einen beweglichen Endteil des Stützorganes verschiebt, wobei man es durch die Ausnehmung im Beckenknochen treten läßt.

12. Verfahren nach Anspruch 5, dadurch gekennzeichnet, daß der über die beiden Hinterbeine auf Förderschienen vertikal aufgehängte Schlachtkörper über dem Stützorgan in vertikale Lage gebracht wird, daß der Schlachtkörper senkrecht zum Stützorgan bewegt wird, derart, daß letzteres durch die Ausnehmung im Beckenknochen tritt, daß man hierauf die Hinterbeine und gleichzeitig das Stützorgan nach und nach absenkt, um es in eine horizontale Lage zu bringen.

13. Verfahren nach einem der vorhergehenden Ansprüche, dadurch gekennzeichnet, daß das Ablösen der Muskeln vom ganzen oder halben Schlachtkörper in horizontaler Lage an einer ortsfesten Arbeitsstelle durch aufeinanderfolgendes händisches Ablösen aller Muskeln erfolgt.

14. Verfahren nach einem der Ansprüche 1 bis 12, dadurch gekennzeichnet, daß der ganze oder halbe Schlachtkörper oder -halbkörper durch eine Vorrichtung gehalten wird, welche die Verschiebung vor mehreren Stationen einer Vorrichtung zum Ablösen von Muskeln gestattet.

15. Einrichtung zur Verarbeitung von ganzen oder halben Schlachtkörpern von Rindern oder anderen Vierfüßern, umfassend wenigstens eine Stützvorrichtung mit einer Stange (51), um die ganzen oder halben Schlachtkörper in horizontaler Lage zu halten, dadurch gekennzeichnet, daß die Stützstange mehrere Haltezähne (56) aufweist, die mit den Seitenflächen der Wirbelsäule zusammenwirken, und daß die Stützvorrichtung umfaßt : wenigstens einen hinteren Druckzylinder (58), der über ein Kugelgelenk mit der Stützstange gekuppelt ist und dessen Kolbenstange (60) Haltemittel (61) für wenigstens ein Hinterbein aufweist ; wenigstens einen vorderen Druckzylinder (62), der über ein Kugelgelenk mit der Stützstange gekuppelt ist und dessen Kolbenstange (64) Haltemittel für wenigstens einen Bereich in der Nähe des Brustbeines aufweist ; daß die Einrichtung überdies Transportmittel aufweist, um den ganzen oder halben Schlachtkörper aus einer ursprünglich vertikalen, aufgehängten Lage in die horizontale Lage auf der Stützstange zu bewegen, wobei die Transportmittel Mittel zum Bewegen der Stützstange, bis in Anlage wenigstens an Teilen der Seitenflächen der Wirbelsäule des aufgehängten Schlachtkörpers und Mittel zum allmählichen Absenken des Aufhängepunktes des Schlachtkörpers, bis sich dieser in der horizontalen Lage befindet, aufweisen.

16. Einrichtung nach Anspruch 15, angepaßt an einen Schlachtkörper, dadurch gekennzeichnet, daß die Transportmittel Mittel zum Verschwenken der Stützstange aus einer vertikalen Stellung in eine horizontale Lage und Mittel zum Absenken des ursprünglich über der vertikalen Stützstange aufgehängten Schlachtkörpers bis dessen Ender durch die Ausnehmung des Beckenknochens eindringt, aufweisen.

17. Einrichtung nach Anspruch 15, angepaßt an einen Schlachtkörper, dadurch gekennzeichnet, daß die Transportmittel Mittel zum Verschieben der Stützstange umfassen, derart, daß diese Stützstange in die Ausnehmung des Beckenknochens verschoben werden kann, nachdem der Schlachttierkörper allmählich bis in die horizontale Lage abgesenkt worden ist.

18. Einrichtung nach Anspruch 17, dadurch gekennzeichnet, daß die Stützvorrichtung überdies einen Druckzylinder zum Geraderichten des Halses aufweist, der über ein Kugelgelenk auf der Oberseite der Stange in der Nähe ihres vorderen Endes befestigt ist.

19. Einrichtung nach Anspruch 17 oder 18, dadurch gekennzeichnet, daß die Stützvorrichtung einen Zugzylinder für den Schwanzknochen aufweist, der auf einem Träger montiert ist, der mit der Oberseite der Stange in der Nähe ihres hinteren Endes verbunden ist.

20. Einrichtung nach einem der Ansprüche 15 bis 19, dadurch gekennzeichnet, daß die Stützvorrichtung Mittel zum Drehen der Stange um ihre Achse aufweist, was eine Drehung des ganzen oder halben Schlachtkörpers bewirkt, um so jeden Teil in der Stellung zum Ablösen der Muskeln zu präsentieren.

21. Einrichtung nach einem der Ansprüche 15 bis 20, dadurch gekennzeichnet, daß sie Mittel zum vertikalen Verschieben des gesamten ganzen oder halben Schlachtkörpers, der auf der Stützvorrichtung gehalten ist, im Verhältnis zu einer Bedienungsperson aufweist, um jeden Teil in der Stellung zum Ablösen der Muskeln zu präsentieren.

22. Einrichtung zum Ablösen von Muskeln von einer Schlachthälfte von Rindern oder anderen Vierfüßern mit Hilfe eines beweglichen Rahmens, dadurch gekennzeichnet, daß sie einen beweglichen Rahmen (10), der eine Längsstrebe (13) aufweist, die an ihren Enden mit zwei Querstreben (11, 12) ausgestattet ist, umfaßt ; eine Klemmeinrichtung (23, 24), die auf einer Drehachse (22) montiert ist, die mit einer der Querstreben (11) verbunden ist und die das dem Hinterbein (2) entsprechende Ende der Schlachthälfte festklemmen kann ; eine Versteifungsstange mit gekrümmten Profil (33, 34), die mehrere Klemmen (35, 42) aufweist, die die in Längsrichtung geschnittenen Wirbel der Schlachthälfte an mehreren Stellen der Wirbelsäule klemmen können, wobei ein Ende der Versteifungsstange exzentrisch auf einer Drehplatte (29) befestigt ist, die auf der zweiten Querstrebe (12) befestigt ist ; Mittel (43) zum Verändern des Abstandes zwischen der Klemmeinrichtung (23, 24) und wenigstens bestimmten der genannten Klemmen (35, 42), in der Art, um eine Zugkraft und eine Versteifung der Schlachthälfte zu bewirken und Mittel zum Drehen des beweglichen Rahmens aus einer vertikalen Lage in eine horizontale Lage.

23. Einrichtung nach Anspruch 22, dadurch gekennzeichnet, daß der Rahmen (10) einen teleskopischen Teil aufweist, dessen Länge unter der Wirkung eines Betätigungszylinders (43) verändert werden kann.

24. Einrichtung nach den Ansprüchen 22 oder 23, dadurch gekennzeichnet, daß die Klemmen (35) auf der Versteifungsstange (33) so montiert sind, daß sie entlang der Stange verschoben werden können, wobei Mittel zum Festlegen derselben an bestimmten Stellen vorgesehen sind.

25. Einrichtung nach einem der Ansprüche 22 bis 24, dadurch gekennzeichnet, daß das freie Ende der Versteifungsstange teleskopisch ist (34), derart, daß die Gesamtlänge der Stange verändert werden kann.

26. Einrichtung nach einem der Ansprüche 22 bis 25, dadurch gekennzeichnet, daß der bewegliche Rahmen (10) ein Teilzahnrad (46) aufweist, das angetrieben werden kann, um den Rahmen (10) um 90° aus einer vertikalen Aufnahmestellung der Schlachthälfte in eine im wesentlichen horizontale Lage zum Ablösen der Muskeln verdrehen zu können.

27. Einrichtung nach einem der Ansprüche 22 bis 26, dadurch gekennzeichnet, daß das freie Ende der Versteifungsstange (33, 34) über einen Bogen (44) mit der Querstrebe (11) verbunden ist, die der Seite des Hinterbeines (2) gegenüberliegt.

28. Einrichtung nach den Ansprüchen 22 bis 27, dadurch gekennzeichnet, daß der bewegliche Rahmen (10) auf einem Gestell (8) montiert ist, das vor verschiedenen Stationen der Einrichtung verschoben werden kann, wobei der Rahmen (10) über wenigstens einen Schwenkhebel (14) befestigt ist, der durch einen Betätigungszylinder (17) angetrieben wird.

29. Einrichtung nach einem der Ansprüche 22 bis 27, dadurch gekennzeichnet, daß der bewegliche Rahmen (10) auf einem Gestell (8) montiert ist, das mit einem Wagen (49) verbunden ist, der die Verschiebebewegung der Vorrichtung vor verschiedenen Stationen der Einrichtung erlaubt.

FIG.1

FIG.2

# FIG.3

# FIG.4

3

FIG.5

FIG.6

FIG.7

## FIG.8

## FIG.9

7

FIG.10

76

77

79

78

79

82

81

80

51

55

**FIG.11**

6

51

55

55

51

78

83

83

76

78

76

55a

55b

55

51a

51

0 121 477

**FIG.12**

83

# FIG.13

55
76
78
84
51
51a
83
83

# FIG.14

76
55
84
51a
51
83
83